# EUROPEAN PATENT APPLICATION

(11) **EP 2 279 896 A2**
(43) Date of publication of application: **02.02.2011**
(21) Application number: 10164120.7
(22) Date of filing: 27.05.2010
(51) Int. Cl.: B60L 11/18, H02J 7/00

(54) **Vehicle that can be charged with electric power from external power supply and method of controlling charging of the vehicle**

(30) Priority: 30.07.2009 JP 2009177653
(71) Applicant: Toyota Jidosha Kabushiki Kaisha, Toyota-shi, Aichi 471-8571 (JP)
(72) Inventor: Mitsutani, Noritake, Toyota-shi Aichi 471-8571 (JP)
(74) Representative: TBK-Patent

(57) **Abstract**

A vehicle ECU (170) includes the steps of determining whether a potential of a pilot signal CPLT is higher than a prescribed reference value α1 or not (S600) and determining whether an AC voltage VAC is higher than a prescribed reference value α2 or not (S630). When the potential of the pilot signal CPLT is higher than the prescribed reference value α1 (YES in S600), the vehicle ECU (170) selects a mode in which charging is performed by using the pilot signal CPLT (S610). On the other hand, when the potential of the pilot signal CPLT is not higher than the prescribed reference value α1 (NO in S600) and when the AC voltage VAC is higher than the prescribed reference value α2 (YES in S630), the vehicle ECU (170) selects a mode in which charging is performed without using the pilot signal CPLT (S640). Thus, a charging system for a vehicle in which a power storage device mounted thereon can be charged by a power supply outside the vehicle and charging can be performed regardless of whether a pilot signal from a charge cable is present or not is provided.

## Description

This nonprovisional application is based on Japanese Patent Application No. 2009-177653 filed with the Japan Patent Office on July 30, 2009, the entire contents of which are hereby incorporated by reference.

### BACKGROUND OF THE INVENTION

### Field of the Invention

The present invention relates to a vehicle and a method of controlling a vehicle, and more particularly to a charging system with which a power storage device mounted on a vehicle can be charged with electric power outside the vehicle.

### Description of the Background Art

Recently, an electrically powered vehicle incorporating a power storage device (such as a secondary battery or a capacitor) and running with drive force generated from electric power stored in the power storage device has attracted attention as an environmentally friendly vehicle. The electrically powered vehicle includes, for example, an electric car, a hybrid car, a fuel cell car, and the like. A technique for charging the power storage device mounted on such an electrically powered vehicle with a commercial power supply high in power generation efficiency has been proposed.

Among hybrid vehicles, as in the case of electric cars, a vehicle in which a power storage device mounted thereon can be charged by a power supply outside the vehicle (hereinafter also simply referred to as an "external power supply") has been known. For example, what is called a "plug-in hybrid vehicle" in which a power storage device can be charged by a power supply in a general household by connecting a power outlet provided in a house and a charge port provided in the vehicle to each other through a charge cable has been known. Improvement in fuel efficiency of a hybrid car can thus be expected.

Japanese Patent Laying-Open No. 2009-071900 (Patent Document 1) discloses a configuration of a charging system permitting suspension of charging for a period of time required for eliminating a cause of suspension of charging in a vehicle in which a power storage device mounted thereon can be charged by an external power supply.

According to this charging system, even if a switch of a connector of a charge cable for connecting the vehicle and the external power supply to each other is turned off for a short period of time due to an operator's incorrect operation, a stand-by state in which charging is suspended while the power storage device and the charging system remain connected to each other can be set for a while, and after a normal operation is performed, charging can be resumed.

In addition, "SAE Electric Vehicle Conductive Charge Coupler," the United States of America, SAE Standards, SAE International, November 2001 (Non-Patent Document 1) defines standards for control pilot by way of example of standards for a plug-in vehicle. Control pilot has a function to give notification that electric power can be supplied between a charge cable and a vehicle or to issue an instruction for starting charging by sending a square wave signal (hereinafter also referred to as a pilot signal) from a transmitter to a control pilot line.

In such regions as North America, charging by an external power supply is basically carried out using a pilot signal, based on the SAE standards described above. In other regions, however, use of a pilot signal is not necessarily required, and charging by an external power supply through a charge cable without using a pilot signal may also be carried out.

In such a case, if a vehicle carries out such control as adapted only to a charge cable using a pilot signal, the vehicle cannot be charged through a charge cable without using a pilot signal.

### SUMMARY OF THE INVENTION

The present invention was made to solve such problems. An object of the present invention is to provide a charging system for a vehicle in which a power storage device mounted thereon can be charged by a power supply outside the vehicle and charging can be performed regardless of whether a pilot signal from a charge cable is present or not.

In summary, the present invention is directed to a vehicle charged with electric power supplied by an external power supply through a charge cable, and the charge cable includes a power line for transmitting electric power supplied from the external power supply to the vehicle and a first connection portion provided at an end portion of the power line on a vehicle side, for connection to the vehicle. The vehicle includes a power storage device, a voltage detector, an inlet for connection to the first connection portion, a charging device, and a first control device. The power storage device is configured to be charged with the electric power supplied by the external power supply. The voltage detector is configured to detect a power supply voltage supplied by the external power supply. The charging device converts the electric power supplied by the external power supply through the inlet and charges the power storage device. The first control device is capable of transmitting and receiving a signal to and from the charge cable and controls the charging device. In addition, the first control device has two charge start modes of a first mode and a second mode. The first control device includes a mode selection unit for switching between the first mode and the second mode in accordance with a type of the charge cable.

Preferably, in the first mode, charging is started based on the power supply voltage detected by the voltage detector. In the second mode, charging is started based on a pilot signal from the charge cable. The mode selection unit selects the first mode when the charge cable is a cable incapable of cut-off of the electric power supplied by the external power supply and selects the second mode when the charge cable is a cable capable of cut-off of the electric power supplied by the external power supply.

Preferably, the first control device further includes a charge control unit configured to cause the charging device to start charging when the voltage detected by the voltage detector is higher than a first reference value while the first mode is selected.

Preferably, the cable capable of cut-off further includes a second control device capable of transmitting and receiving a signal to and from the first control device. In addition, the pilot signal is a signal transmitted from the second control device to the first control device, relating to a state of connection of the cable capable of cut-off. The mode selection unit determines that the charge cable is the cable capable of cut-off based on the pilot signal.

Preferably, the mode selection unit determines that the charge cable is the cable capable of cut-off when the pilot signal has a potential higher than a second reference value.

Preferably, the first control device further includes a charge control unit configured to cause the charging device to start charging when the charge cable is the cable capable of cut-off and when the pilot signal has a potential between the second reference value and a third reference value higher than the second reference value.

Preferably, the cable capable of cut-off further includes a relay capable of switching between supply and cut-off of the electric power supplied by the external power supply to the vehicle, based on a control command from the first control device. In addition, the first control device further includes a fault determination unit configured to determine a faulty state of the charge cable based on the control command for the relay and the voltage detected by the voltage detector, when the charge cable is the cable capable of cut-off. A charge control unit stops a charging operation when the fault determination unit determines that the charge cable is faulty.

Preferably, the fault determination unit determines the charge cable as faulty when the control command for the relay is a command for opening the relay and when the voltage detected by the voltage detector is higher than a prescribed value.

Preferably, the fault determination unit determines the charge cable as faulty when the control command for the relay is a command for closing the relay and when the voltage detected by the voltage detector is lower than a prescribed value.

According to another aspect of the present invention, a method of controlling a vehicle charged with electric power supplied by an external power supply through a charge cable is provided. The charge cable includes a power line for transmitting electric power supplied from the external power supply to the vehicle and a first connection portion provided at an end portion of the power line on a vehicle side, for connection to the vehicle. The vehicle includes a power storage device configured to be charged with the electric power supplied by the external power supply, a voltage detector configured to detect a power supply voltage supplied by the external power supply, an inlet for connection to the first connection portion, and a charging device for converting the electric power supplied by the external power supply through the inlet and charging the power storage device. The method has a first mode in which charging is started based on the power supply voltage detected by the voltage detector and a second mode in which charging is started based on a pilot signal from the charge cable. The method includes the steps of selecting the first mode when the charge cable is a cable incapable of cut-off of the electric power supplied by the external power supply and selecting the second mode when the charge cable is a cable capable of cut-off of the electric power supplied by the external power supply.

Therefore, according to the present invention, in the charging system for the vehicle in which the power storage device mounted thereon can be charged by the power supply outside the vehicle, charging can be performed regardless of whether a pilot signal from the charge cable is present or not.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a schematic diagram of a charging system for an electrically powered vehicle 10 with the use of a charge cable 300 for charging using a pilot signal CPLT, according to the present embodiment.
Fig. 2 is a diagram for illustrating a charging circuit shown in Fig. 1 in further detail.
Fig. 3 is a schematic diagram of a charging system for electrically powered vehicle 10 with the use of a charge cable 300# for charging without using pilot signal CPLT, according to the present embodiment.
Fig. 4 is a timing chart for illustrating charge start control for charging using pilot signal CPLT, in the present embodiment.
Fig. 5 is a timing chart for illustrating charge start control for charging without using pilot signal CPLT, in the present embodiment.
Fig. 6 is a timing chart exemplifying a case where fault of fixation in a closed state of a CCID relay 332 occurred.
Fig. 7 is a timing chart exemplifying a case where AC line open fault occurred.
Fig. 8 is a functional block diagram for illustrating charge start control carried out by a vehicle ECU 170 in the present embodiment.
Fig. 9 is a flowchart for illustrating details of charge start control processing performed by vehicle ECU 170 in the present embodiment.
Fig. 10 is a flowchart for illustrating details of charge start processing performed by vehicle ECU 170 in S620A in Fig. 9 after a "mode 1" is selected as a charge mode.
Fig. 11 is a flowchart for illustrating details of charge start processing performed by vehicle ECU 170 in S620B in Fig. 9 after a "mode 2" is selected as a charge mode.

### DESCRIPTION OF THE PREFERRED EMBODIMENTS

An embodiment of the present invention will be described hereinafter in detail with reference to the drawings. In the drawings, the same or corresponding elements have the same reference characters allotted and description thereof will not be repeated.

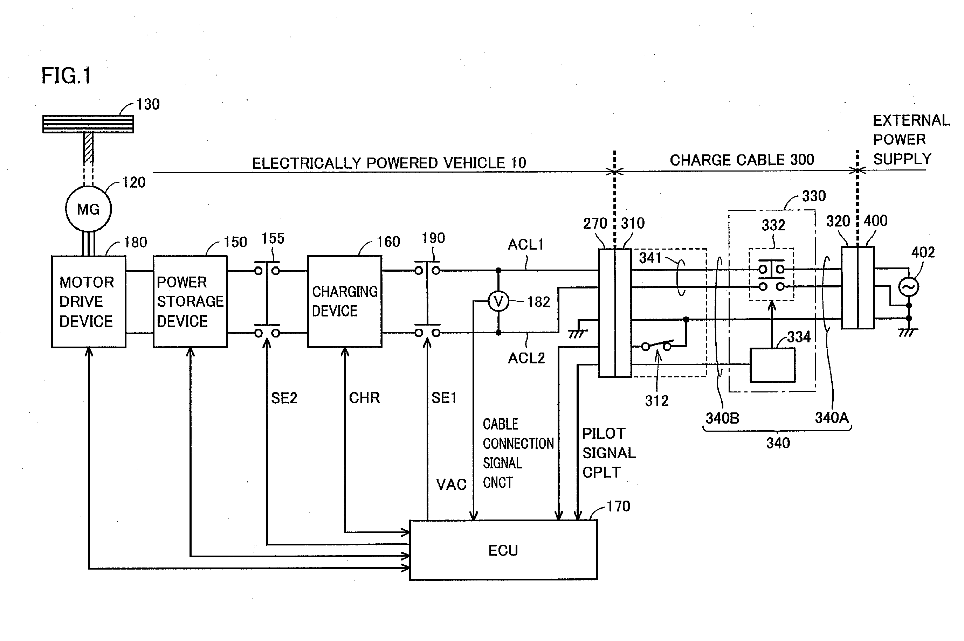

Fig. 1 is a schematic diagram of a charging system for an electrically powered vehicle 10 according to the present embodiment. It is noted that a configuration of electrically powered vehicle 10 is not particularly limited so long as it can run with electric power from a power storage device chargeable by an external power supply. Electrically powered vehicle 10 includes, for example, a hybrid car, an electric car, a fuel cell car, and the like. In addition, any vehicle other than an electrically powered vehicle, that incorporates a chargeable power storage device, such as a vehicle that runs using an internal combustion engine, is also applicable.

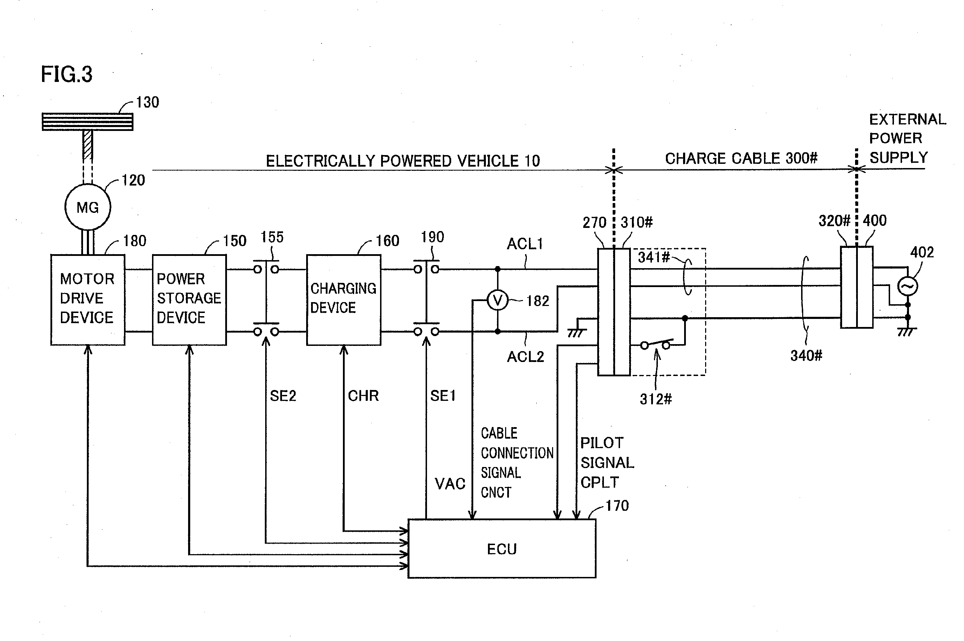

A charge cable 300 used in the embodiment shown in Fig. 1 is a cable capable of transmitting and receiving a pilot signal CPLT to and from electrically powered vehicle 10. Charging using such a cable is herein referred to as a "charge mode 2" and such a charge cable is also referred to as a "mode 2 cable." On the other hand, as will be described later in connection with Fig. 3, charging using a cable without transmitting and receiving pilot signal CPLT is referred to as a "charge mode 1" and such a charge cable is also referred to as a "mode 1 cable."

Referring to Fig. 1, electrically powered vehicle 10 includes an inlet 270, relays 155 and 190, a charging device 160, a power storage device 150, a motor drive device 180, a motor generator (hereinafter also referred to as "MG") 120, and a wheel 130. In addition, electrically powered vehicle 10 further includes a vehicle ECU (Electronic Control Unit) 170 and a voltage sensor 182.

A connector 310 of charge cable 300 is connected to inlet 270.

Charging device 160 is connected to inlet 270 through power lines ACL1 and ACL2 via relay 190. In addition, charging device 160 is connected to power storage device 150 via relay 155. Charging device 160 converts AC power fed by a power supply 402 outside the vehicle to DC power with which power storage device 150 can be charged, based on a control signal CHR from vehicle ECU 170, and supplies the DC power to power storage device 150.

Power storage device 150 is an electric power storage element configured such that it can be charged and discharge. Power storage device 150 includes, for example, a secondary battery such as a lithium ion battery, a nickel metal hydride battery or a lead acid battery, or a power storage element such as an electric double layer capacitor.

Power storage device 150 stores DC power converted by charging device 160. Power storage device 150 is connected to motor drive device 180 for driving MG 120 and it supplies DC power to be used for driving the vehicle. Meanwhile, power storage device 150 stores electric power generated by MG 120.

Power storage device 150 further includes a voltage sensor (not shown) connected between power lines connected to power storage device 150 and a current sensor (not shown) connected to a power line on a positive electrode side or a negative electrode side, and outputs values of an output voltage and a current signal detected by the current sensor to vehicle ECU 170.

Motor drive device 180 is connected to power storage device 150 and MG 120. Motor drive device 180 converts electric power supplied by power storage device 150 to electric power for driving and controlling MG 120 under the control of vehicle ECU 170. Motor drive device 180 is configured, for example, to include a three-phase inverter.

MG 120 is connected to motor drive device 180 and to wheel 130 with a not-shown power split device, a not-shown reduction gear or the like being interposed. MG 120 receives electric power supplied from motor drive device 180 and generates drive force for causing electrically powered vehicle 10 to run. Meanwhile, MG 120 receives rotation force from wheel 130 and generates AC power, to generate regenerative braking force in response to a regenerative torque command from vehicle ECU 170. MG 120 is implemented, for example, by a three-phase AC motor generator including a rotor having a permanent magnet embedded and a stator having a Y-connected three-phase coil.

In a hybrid car incorporating an engine (not shown) in addition to MG 120, vehicle ECU 170 carries out control such that an optimal ratio between drive forces from the engine and MG 120 is attained.

Voltage sensor 182 is provided between power lines ACL1 and ACL2 and it detects a voltage of electric power supplied by external power supply 402. Voltage sensor 182 outputs a voltage detection value VAC to vehicle ECU 170.

Relay 190 is inserted at some midpoint of each of power lines ACL1 and ACL2. Relay 190 is controlled by a control signal SE1 from vehicle ECU 170. Relay 190 switches between supply and cut-off of electric power supplied by external power supply 402 to charging device 160.

Relay 155 is provided in a path connecting charging device 160 and power storage device 150 to each other. Relay 155 switches between start and stop of charging of power storage device 150 under the control by a control signal SE2 from vehicle ECU 170. Though the present embodiment is configured such that relay 155 is provided separately from power storage device 150, relay 155 may be contained in power storage device 150.

Vehicle ECU 170 includes a CPU (Central Processing Unit), a storage device, and an input/output buffer, none of which is shown in Fig. 1, and it receives a signal from each sensor or the like, outputs a control command to each device, and controls electrically powered vehicle 10 and each device. It is noted that such control is not limited to processing using software and dedicated hardware (electronic circuits) may also be constructed for such processing.

Vehicle ECU 170 receives input of a cable connection signal CNCT and pilot signal CPLT from charge cable 300 through inlet 270. In addition, vehicle ECU 170 receives input of voltage detection value VAC of received electric power from voltage sensor 182.

In addition, vehicle ECU 170 receives inputs of detection values of a current, a voltage and a temperature from each sensor (not shown) provided in power storage device 150 and calculates a state quantity indicating a state of charge (hereinafter also referred to as "SOC") of power storage device 150.

Then, vehicle ECU 170 controls charging device 160, relays 155 and 190 and the like for charging power storage device 150, based on such information.

Charge cable 300 includes connector 310 provided at an end portion on a vehicle side, a plug 320 provided at an end portion on an external power supply side, a charging circuit interrupt device (hereinafter also referred to as "CCID") 330, and an electric line portion 340 for input and output of electric power and a control signal by connecting these devices with one another.

Electric line portion 340 includes an electric line portion 340A for connecting plug 320 and CCID 330 to each other and an electric line portion 340B for connecting connector 310 and CCID 330 to each other. In addition, electric line portion 340 includes a power line 341 for transmitting electric power from external power supply 402.

Charge cable 300 is connected to a power outlet 400 of external power supply 402 (for example, a commercial power supply) through plug 320 of charge cable 300. In addition, inlet 270 provided in a body of electrically powered vehicle 10 and connector 310 of charge cable 300 are connected to each other, so that electric power from power supply 402 outside the vehicle is transmitted to electrically powered vehicle 10. Charge cable 300 is removably attached to external power supply 402 and electrically powered vehicle 10.

A connection sensing circuit 312 for sensing connection of connector 310 is provided within connector 310 and connection sensing circuit 312 senses a state of connection between inlet 270 and connector 310. Connection sensing circuit 312 outputs cable connection signal CNCT indicating a connection state to vehicle ECU 170 of electrically powered vehicle 10 via inlet 270.

Connection sensing circuit 312 may be implemented by a limit switch as shown in Fig. 1 so that a potential of cable connection signal CNCT attains to 0V when connector 310 is connected to inlet 270. Alternatively, connection sensing circuit 312 may be implemented by a resistor (not shown) having a prescribed resistance value so that a potential of cable connection signal CNCT is lowered to a prescribed potential at the time of connection. In any case, as vehicle ECU 170 detects a potential of cable connection signal CNCT, connection of connector 310 to inlet 270 is detected.

CCID 330 includes a CCID relay 332 and a control pilot circuit 334. CCID relay 332 is inserted in power line 341 within charge cable 300. CCID relay 332 is controlled by control pilot circuit 334. While CCID relay 332 is turned off, an electric path is disconnected in charge cable 300. On the other hand, when CCID relay 332 is turned on, electric power is supplied from external power supply 402 to electrically powered vehicle 10.

Control pilot circuit 334 outputs pilot signal CPLT to vehicle ECU 170 through connector 310 and inlet 270. Pilot signal CPLT is a signal for notifying vehicle ECU 170 of a rated current of charge cable 300 from control pilot circuit 334. In addition, pilot signal CPLT is used also as a signal for remote control of CCID relay 332 by vehicle ECU 170, based on a potential of pilot signal CPLT controlled by vehicle ECU 170. Control pilot circuit 334 controls CCID relay 332 based on variation in a potential of pilot signal CPLT. Namely, pilot signal CPLT is transmitted and received between vehicle ECU 170 and CCID 330.

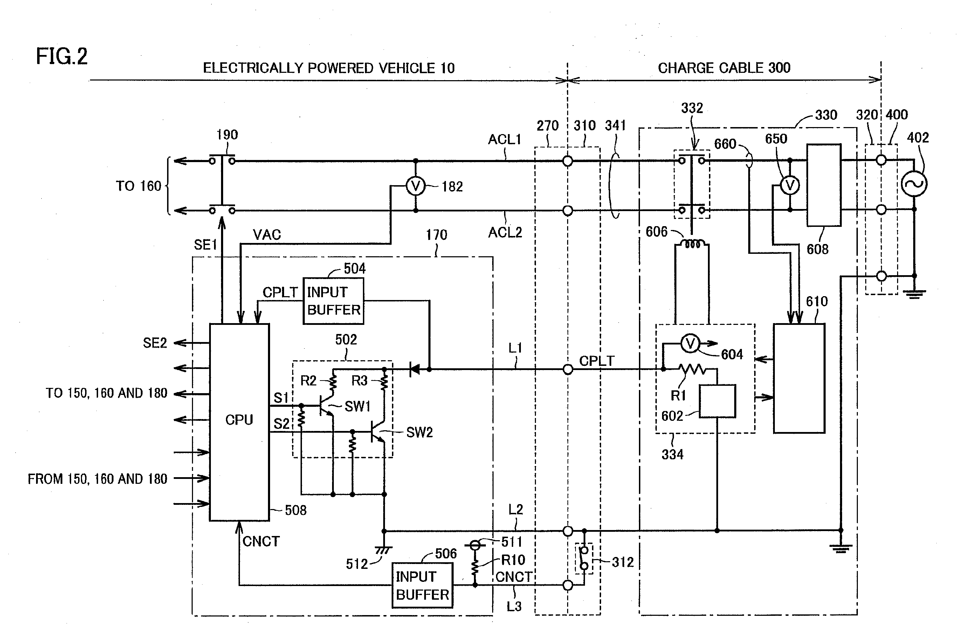

Fig. 2 is a diagram for illustrating the charging circuit shown in Fig. 1 in further detail. It is noted that description of redundant elements in Fig. 2 labeled with the same reference characters as in Fig. 1 will not be repeated.

Referring to Fig. 2, CCID 330 further includes an electromagnetic coil 606, a leakage detector 608, a CCID control unit 610, a voltage sensor 650, and a current sensor 660, in addition to CCID relay 332 and control pilot circuit 334. In addition, control pilot circuit 334 includes an oscillation device 602, a resistor element R1, and a voltage sensor 604.

CCID control unit 610 includes a CPU, a storage device, and an input/output buffer, none of which is shown, and it receives and outputs a signal between each sensor and control pilot circuit 334 and controls a charging operation of charge cable 300.

Oscillation device 602 outputs a non-oscillating signal when a potential of pilot signal CPLT detected by voltage sensor 604 is at a predetermined potential. When the potential of pilot signal CPLT is lowered from the predetermined potential above, oscillation device 602 outputs a signal oscillating at a predetermined frequency (for example, 1 kHz) and a duty cycle under the control of CCID control unit 610.

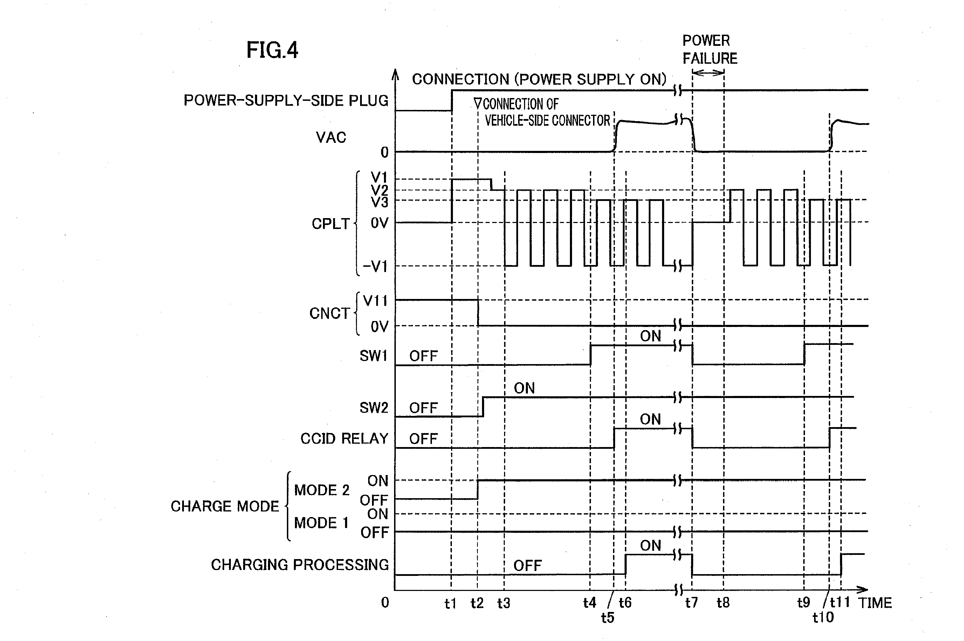

As will be described later with reference to Fig. 4, the potential of pilot signal CPLT can be controlled also by vehicle ECU 170. In addition, the duty cycle is set based on a rated current that can be supplied from external power supply 402 through charge cable 300 to electrically powered vehicle 10.

When the potential of pilot signal CPLT is lowered from the predetermined potential as described above, pilot signal CPLT oscillates at a predetermined period T. Here, a pulse width Ton of pilot signal CPLT is set based on a rated current that can be supplied from external power supply 402 through charge cable 300 to electrically powered vehicle 10. Namely, control pilot circuit 334 notifies vehicle ECU 170 of electrically powered vehicle 10 of a rated current by using pilot signal CPLT, based on duty indicated by a ratio of pulse width Ton to period T.

It is noted that the rated current is determined for each charge cable 300 and a rated current is different depending on a type of charge cable 300. Therefore, duty of pilot signal CPLT is also different for each charge cable 300.

Vehicle ECU 170 of electrically powered vehicle 10 can sense a rated current that can be supplied from external power supply 402 through charge cable 300 to electrically powered vehicle 10, based on the duty of pilot signal CPLT received through a control pilot line L1.

When the potential of pilot signal CPLT is further lowered by vehicle ECU 170, control pilot circuit 334 supplies a current to electromagnetic coil 606. Electromagnetic coil 606 generates electromagnetic force when a current is supplied from control pilot circuit 334 and closes a contact of CCID relay 332 so as to set an ON state.

Leakage detector 608 is provided at some midpoint of power line 341 in charge cable 300 within CCID 330 and it detects whether leakage occurred or not. Specifically, leakage detector 608 detects a balance state between currents that flow in directions opposite to each other through a pair of power lines 341 and senses occurrence of leakage when that balance state is lost. Though not shown in particular, when leakage detector 608 detects leakage, power feed to electromagnetic coil 606 is cut off and the contact of CCID relay 332 is opened so as to set an OFF state.

When plug 320 of charge cable 300 is inserted in power outlet 400, voltage sensor 650 senses a voltage of external power supply 402 and notifies CCID control unit 610 of the detection value. Current sensor 660 senses a charging current that flows through power line 341 and notifies CCID control unit 610 of the detection value.

As described above, connection sensing circuit 312 contained in connector 310 is implemented, for example, by a limit switch. The contact is closed while connector 310 is connected to inlet 270 and the contact is opened while connector 310 is disconnected from inlet 270.

While connector 310 is disconnected from inlet 270, connection sensing circuit 312 generates as cable connection signal CNCT on a connection signal line L3, a voltage signal determined by a voltage of a power supply node 511 and a pull-up resistor R10 included in vehicle ECU 170. On the other hand, while connector 310 is connected to inlet 270, a potential of connection signal line L3 attains to 0V because connection signal line L3 is short-circuited to a ground line L2.

It is noted that connection sensing circuit 312 can also be implemented by a pull-down resistor (not shown). In that case, while connector 310 is connected to inlet 270, a voltage signal determined by a voltage of power supply node 511 and pull-up resistor R10 as well as by this pull-down resistor is generated on connection signal line L3.

Whichever of the limit switch and the pull-down resistor as described above may implement connection sensing circuit 312, vehicle ECU 170 can detect a state of connection of connector 310 by detecting a potential generated on connection signal line L3 (that is, a potential of cable connection signal CNCT).

Meanwhile, on the vehicle side, vehicle ECU 170 further includes a resistor circuit 502, input buffers 504 and 506, and a CPU 508, in addition to power supply node 511 and pull-up resistor R10 described above. Resistor circuit 502 includes pull-down resistors R2 and R3 and switches SW1 and SW2. Pull-down resistor R2 and switch SW1 are connected in series between control pilot line L1 through which pilot signal CPLT is communicated and a vehicle ground 512. Pull-down resistor R3 and switch SW2 are also connected in series between control pilot line L1 and vehicle ground 512. Switches SW1 and SW2 are controlled to ON or OFF in response to control signals S1 and S2 from CPU 508, respectively.

Resistor circuit 502 is a circuit for controlling a potential of pilot signal CPLT from electrically powered vehicle 10 side.

Input buffer 504 receives pilot signal CPLT from control pilot line L1 and outputs received pilot signal CPLT to CPU 508. Input buffer 506 receives cable connection signal CNCT from connection signal line L3 connected to connection sensing circuit 312 of connector 310 and outputs received cable connection signal CNCT to CPU 508. As described above, a voltage is applied to connection signal line L3 by vehicle ECU 170, and a potential of cable connection signal CNCT varies in accordance with connection of connector 310 to inlet 270. Therefore, by detecting a potential of cable connection signal CNCT, CPU 508 can detect a state of connection of connector 310.

CPU 508 receives pilot signal CPLT and cable connection signal CNCT from input buffers 504 and 506, respectively.

CPU 508 detects a potential of cable connection signal CNCT and detects a state of connection of connector 310.

In addition, CPU 508 detects a rated current of charge cable 300 as described above, by sensing an oscillation state and a duty cycle of pilot signal CPLT.

CPU 508 controls a potential of pilot signal CPLT by controlling control signals S1 and S2 for respective switches SW1 and SW2 based on a potential of cable connection signal CNCT and a state of oscillation of pilot signal CPLT. Thus, CPU 508 can remotely control CCID relay 332. Electric power is thus transmitted from external power supply 402 through charge cable 300 to electrically powered vehicle 10.

Referring to Figs. 1 and 2, when the contact of CCID relay 332 is closed, CPU 508 issues control signal SE1 to close the contact of relay 190. Thus, AC power from external power supply 402 is provided to charging device 160 and preparation for charging of power storage device 150 by external power supply 402 is completed. Then, CPU 508 outputs control signal CHR to charging device 160 to convert electric power and issues control signal SE2 to close the contact of relay 155, to thereby charge power storage device 150.

In such regions as North America, a configuration of a charging system for charging using pilot signal CPLT as described above has been standardized. In other regions, however, a charging system configured to carry out charging without using pilot signal CPLT is also available. Therefore, in charging a vehicle by using an external power supply, not only a cable for charging using pilot signal CPLT (the mode 2 cable) but also a cable for charging without using pilot signal CPLT (the mode 1 cable) may be used in some cases, and a vehicle adapted to charging by using any cable is desired.

Fig. 3 is a schematic diagram of a charging system for electrically powered vehicle 10 in an example where the "charge mode 1" for charging without transmission and reception of pilot signal CPLT is employed. Fig. 3 shows an example where charge cable 300 in Fig. 1 has been replaced with a charge cable 300# which is the "mode 1 cable" but the configuration of electrically powered vehicle 10 is the same as in Fig. 1. Description of redundant elements in Fig. 3 labeled with the same reference characters as in Fig. 1 will not be repeated.

Referring to Fig. 3, charge cable 300# includes a connector 310# provided at an end portion to be connected to the vehicle, a plug 320# provided at an end portion to be connected to the external power supply, and an electric line portion 340# for connection between connector 310# and plug 320# to each other for input and output of electric power and a control signal.

Electric line portion 340# includes a power line 341# for transmitting electric power from external power supply 402.

Charge cable 300# is connected to power outlet 400 of external power supply 402 (for example, a commercial power supply) through plug 320# of charge cable 300#. In addition, inlet 270 provided in the body of electrically powered vehicle 10 and connector 310# of charge cable 300# are connected to each other so that electric power from power supply 402 outside the vehicle is transmitted to electrically powered vehicle 10. Charge cable 300# is removably attached to external power supply 402 and electrically powered vehicle 10.

A connection sensing circuit 312# for sensing connection of connector 310# is provided within connector 310# and connection sensing circuit 312# senses a state of connection between inlet 270 and connector 310#. Connection sensing circuit 312# outputs cable connection signal CNCT indicating a connection state to vehicle ECU 170 of electrically powered vehicle 10 via inlet 270.

Connection sensing circuit 312# may be implemented by a limit switch as in the case of connection sensing circuit 312 in Fig. 1 or may be implemented by a resistor (not shown) having a prescribed resistance value. In the "charge mode 1," connection sensing circuit 312# is not necessarily required, and such a configuration that connector 310# does not contain connection sensing circuit 312# may also be employed.

As shown in Fig. 3, charge cable 300# does not include CCID 330 as in charge cable 300 in Fig. 1. Namely, plug 320# and connector 310# are directly connected to each other through electric line portion 340#. Therefore, when charge cable 300# is connected to both of external power supply 402 and electrically powered vehicle 10, AC power from external power supply 402 is directly supplied to electrically powered vehicle 10.

As pilot signal CPLT is not input from charge cable 300# to electrically powered vehicle 10, vehicle ECU 170 cannot control start and stop of charging based on a potential and a state of oscillation of pilot signal CPLT as in Figs. 1 and 2. Therefore, in the "charge mode 1," vehicle ECU 170 determines a charge mode based on AC voltage VAC detected by voltage sensor 182 and cable connection signal CNCT (if connector 310# contains connection sensing circuit 312#) and controls start of charging.

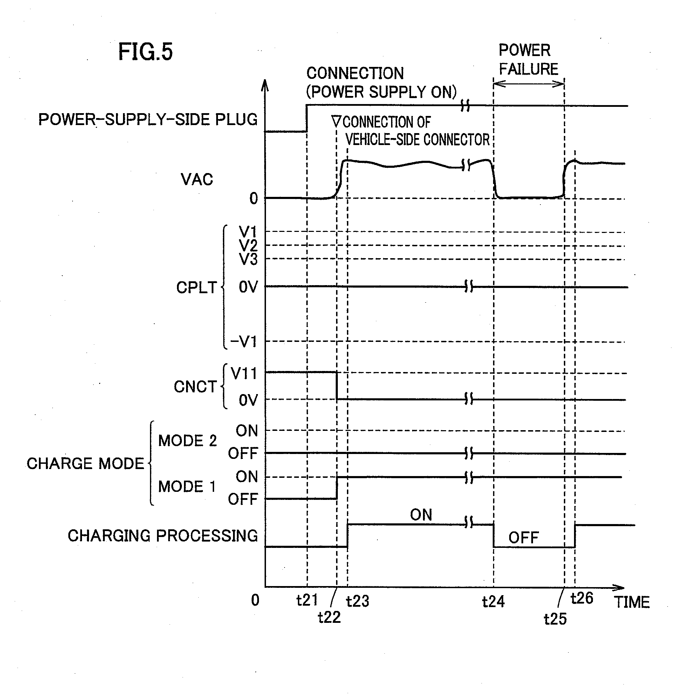

Charge start control in the two charge modes above will now be described with reference to Figs. 4 and 5.

Fig. 4 is a timing chart for illustrating charge start control in the "charge mode 2," that is, when pilot signal CPLT is used. The abscissa in Fig. 4 represents time and the ordinate represents a state of connection of power supply plug 320, AC voltage VAC detected by voltage sensor 182, a potential of pilot signal CPLT, a state of cable connection signal CNCT, states of switches SW1 and SW2, a state of CCID relay 332, a charge mode, and a state of charging processing performed.

Referring to Figs. 2 and 4, until time t1, charge cable 300 is connected to neither of electrically powered vehicle 10 and external power supply 402. In such a state, each switch and CCID relay 332 are in an OFF state and a potential of pilot signal CPLT is at 0V. In addition, a potential of cable connection signal CNCT is at V11 (>OV).

At time t1, when plug 320 of charge cable 300 is connected to power outlet 400 of external power supply 402, control pilot circuit 334 generates pilot signal CPLT upon receiving electric power from external power supply 402.

It is noted that connector 310 of charge cable 300 is not connected to inlet 270 at time t1. In addition, the potential of pilot signal CPLT is at V1 (for example, 12V) and pilot signal CPLT is in a non-oscillating state.

At time t2, when connector 310 is connected to inlet 270, connection sensing circuit 312 lowers the potential of cable connection signal CNCT. Here, CPU 508 recognizes that charge cable 300 is the "mode 2 cable" by recognizing input of pilot signal CPLT and selects the "mode 2" as the charge mode.

Then, CPU 508 detects connection between connector 310 and inlet 270 based on detection of lowering in the potential of cable connection signal CNCT. In response thereto, CPU 508 activates control signal S2 to turn on switch SW2. Then, the potential of pilot signal CPLT is lowered to V2 (for example, 9V) by pull-down resistor R3 in resistor circuit 502.

At time t3, CCID control unit 610 detects lowering in the potential of pilot signal CPLT to V2. In response thereto, CCID control unit 610 causes pilot signal CPLT to oscillate.

When CPU 508 detects oscillation of pilot signal CPLT, CPU 508 detects a rated current of charge cable 300 based on duty of pilot signal CPLT, as described above.

Then, CPU 508 activates control signal S1 so as to turn on switch SW1, for starting a charging operation. In response thereto, pull-down resistor R2 lowers the potential of pilot signal CPLT to V3 (for example, 6V) (time t4 in Fig. 4).

When CCID control unit 610 detects lowering in the potential of pilot signal CPLT to V3, at time t5, the contact of CCID relay 332 is closed so that electric power from external power supply 402 is transmitted to electrically powered vehicle 10 through charge cable 300.

Thereafter, when AC voltage VAC is detected in electrically powered vehicle 10, CPU 508 causes the contacts of relay 155 (Fig. 1) and relay 190 to close and controls charging device 160 (Fig. 1), to thereby start charging of power storage device 150 (Fig. 1) (time t6 in Fig. 4).

If the external power supply fails while charging processing is being performed (time t7 in Fig. 4), power supply to CCID 330 is stopped and therefore pilot signal CPLT is set to 0V. In response thereto, SW1 is turned off, CCID relay 332 is opened, and the charging processing stops.

Here, in the case of power failure for an extremely short period of time such as instantaneous power interruption (for example, for several seconds), CPU 508 may set "stand-by during power failure" in which the charge mode, relays 155 and 190, charging device 160, and the like are maintained in a charge proceeding state such that charging is resumed immediately after power failure recovers. If power failure does not recover even after lapse of prescribed several seconds, "stand-by during power failure" is canceled and the relays, charging device 160 and the like are set to a charge stop state. Alternatively, if connector 310 is disconnected from electrically powered vehicle 10 (for example, if a potential of cable connection signal CNCT is equal to or higher than a prescribed level), CPU 508 does not set "stand-by during power failure" but immediately sets the relays, charging device 160 and the like to the charge stop state.

If power failure recovers during "stand-by during power failure" (time t8 in Fig. 4), pilot signal CPLT immediately attains to potential V2 and it is set to an oscillating state by CCID control unit 610 because SW2 remains ON. Then, CPU 508 detects a rated current of charge cable 300 based on the oscillating state of pilot signal CPLT and activates SW1 to lower the potential of pilot signal CPLT to potential V3 (time t9 in Fig. 4). In response thereto, CCID control unit 610 turns on CCID relay 332 at time t10, and thus charging is resumed (time t11 in Fig. 4).

Charge start control in using the "mode 1 cable" will now be described with reference to Fig. 5. The abscissa in Fig. 5 represents time and the ordinate represents a state of connection of power supply plug 320#, AC voltage VAC detected by voltage sensor 182, a state of cable connection signal CNCT, a charge mode, and a state of charging processing performed.

Referring to Figs. 3 and 5, until time t21, charge cable 300# is connected to neither electrically powered vehicle 10 nor external power supply 402.

At time t21, plug 320# of charge cable 300# is connected to power outlet 400 of external power supply 402. Here, as charge cable 300# does not include CCID 330 (Fig. 1) included in charge cable 300 (Fig. 1), pilot signal CPLT is not output, with the potential of pilot signal CPLT detected by vehicle ECU 170 remaining at 0V.

When connector 310# of charge cable 300# is connected to inlet 270 at time t22, connection sensing circuit 312# lowers the potential of cable connection signal CNCT. In addition, electric power from external power supply 402 is supplied to electrically powered vehicle 10 and voltage sensor 182 detects voltage VAC of supplied AC power. Here, vehicle ECU 170 recognizes that charge cable 300# is the "mode 1 cable" based on the fact that there is no input of pilot signal CPLT and AC voltage VAC is detected, and it selects the "mode 1" as the charge mode. If charge cable 300# has connection sensing circuit 312#, lowering in a potential of cable connection signal CNCT may be added to the condition above.

Then, at time t23, vehicle ECU 170 causes the contacts of relay 155 and relay 190 to close and controls charging device 160, to thereby start charging of power storage device 150.

If the external power supply fails while the charging processing is being performed as in Fig. 4, AC voltage VAC lowers to 0V and hence vehicle ECU 170 stops the charging processing. Even in the "charge mode 1," "stand-by during power failure" as described in connection with Fig. 4 is set. Then, when power failure recovers during "stand-by during power failure," charging is resumed (time t26 in Fig. 5) after vehicle ECU 170 again detects AC voltage VAC (time t25 in Fig. 5).

By thus determining a type of a charge cable used for charging (or a charge mode) in the vehicle and carrying out charge start control in accordance therewith, charging by the external power supply can be performed with any cable of the "mode 1 cable" and the "mode 2 cable."

Here, in the "charge mode 2," "fault detection processing," in which vehicle ECU 170 detects such a fault as fixation of a relay due to failure of CCID relay 332 or breakage of power line 341, is often adopted.

If the "fault detection processing" is constantly performed in an example where charging by the external power supply can be performed by using any cable of the "mode 1 cable" and the "mode 2 cable" as described above, however, erroneous determination as fault is made when the "mode 1 cable" is employed. Therefore, such "fault detection processing" should be performed only in the "charge mode 2."

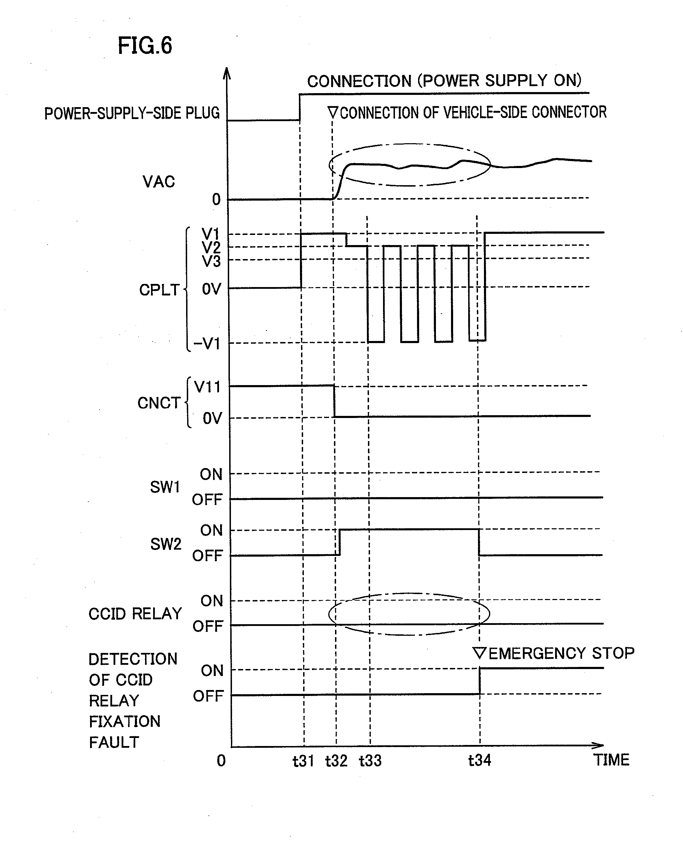

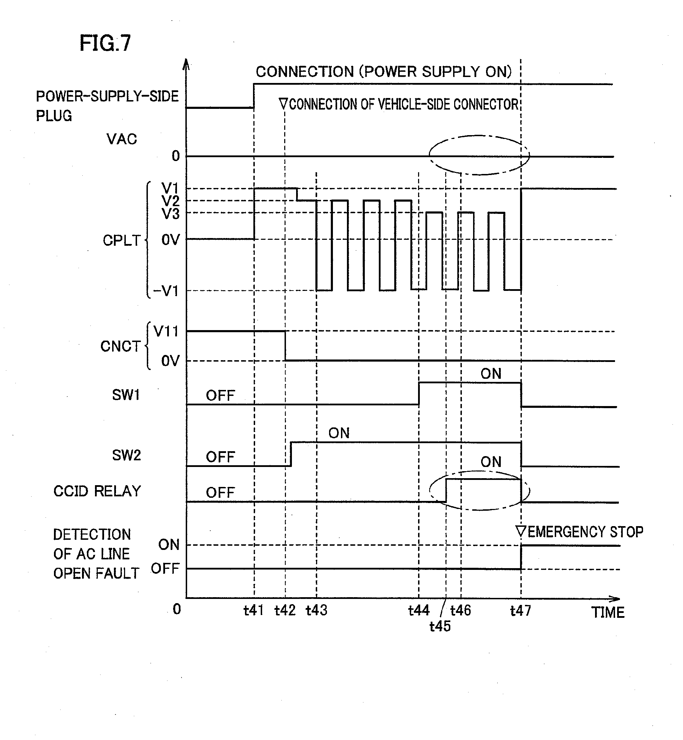

Figs. 6 and 7 are timing charts for illustrating a method of determination in the "fault detection processing" above. Fig. 6 is a timing chart in a case where fault of fixation in a closed state of CCID relay 332 occurred, and Fig. 7 is a timing chart in a case where fixation in an open state of the CCID relay occurred or power line 341 broke (hereinafter also referred to as "AC line open fault").

Referring to Figs. 2 and 6, in a case where the "mode 2 cable" is used, during a normal operation, AC voltage VAC is detected only when CCID relay 332 is closed. If CCID relay 332 adheres in the closed state, however, connection of plug 320 and connector 310 of charge cable 300 to external power supply 402 and electrically powered vehicle 10 respectively will result in transmission of electric power from external power supply 402 to electrically powered vehicle 10. Therefore, at time t32, voltage sensor 182 detects AC voltage VAC. Here, CPU 508 determines that fault of fixation in a closed state of CCID relay 332 occurred based on detection of AC voltage VAC despite the fact that a drive command for CCID relay 332, that is, a command for turning on switch SW1, is not output. Thus, CPU 508 performs an emergency stop operation so as to stop the charging processing.

Meanwhile, referring to Figs. 2 and 7, when AC line open fault occurs while the "mode 2 cable" is used, AC voltage VAC is not detected despite the fact that a command to close CCID relay 332 is output at such times as t45 to t47 in Fig. 7. When such a state is detected, CPU 508 determines that AC line open fault occurred. Thus, CPU 508 performs an emergency stop operation so as to stop the charging processing.

In the case of the "charge mode 1," as described in connection with Fig. 5, AC power supply VAC is detected at the time point of connection of charge cable 330# to external power supply 402 and electrically powered vehicle 10. As charge cable 330# does not output pilot signal CPLT, CPU 508 does not output a command for driving CCID relay 332. Consequently, a condition the same as fault of fixation in a closed state of CCID relay 332 described above in connection with Fig. 6 may be satisfied and erroneous determination may be made.

Therefore, in the present embodiment, charge start control, in which fault detection processing is performed only in the "charge mode 2" while charging by the external power supply can be performed through any cable of the "mode 1 cable" and the "mode 2 cable," is carried out.

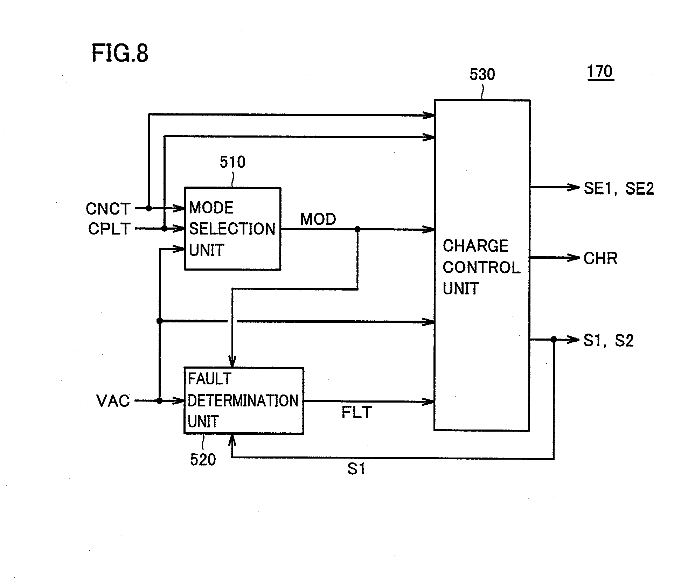

Fig. 8 is a functional block diagram for illustrating charge start control carried out by vehicle ECU 170 in the present embodiment. Each functional block shown in the functional block diagram in Fig. 8 is implemented by hardware or software processing performed by vehicle ECU 170.

Referring to Fig. 8, vehicle ECU 170 includes a mode selection unit 510, a fault determination unit 520, and a charge control unit 530.

Mode selection unit 510 receives input of pilot signal CPLT and cable connection signal CNCT from the charge cable. In addition, mode selection unit 510 further receives input of AC voltage VAC detected by voltage sensor 182. Mode selection unit 510 determines which of the "mode 1 cable" and the "mode 2 cable" is connected as the charge cable, based on these input signals. Mode selection unit 510 selects the charge mode in accordance with this determination and outputs a mode signal MOD indicating the selected charge mode to fault determination unit 520 and charge control unit 530.

Fault determination unit 520 receives input of mode signal MOD from mode selection unit 510 and AC voltage VAC detected by voltage sensor 182. In addition, fault determination unit 520 further receives input of control signal S1 for switch SW1, which is a command for driving CCID relay 332, from charge control unit 530. When mode signal MOD indicates the "charge mode 2," fault determination unit 520 determines whether fault of fixation in a closed state of CCID relay 332 or AC line open fault described in connection with Figs. 6 and 7 occurred or not, based on AC voltage VAC and control signal S1. Then, fault determination unit 520 outputs a fault detection signal FLT indicating a result of determination to charge control unit 530.

Charge control unit 530 receives input of pilot signal CPLT and cable connection signal CNCT from the charge cable. In addition, charge control unit 530 further receives input of mode signal MOD from mode selection unit 510, fault detection signal FLT from fault determination unit 520, and AC voltage VAC.

Then, when mode signal MOD indicates the "charge mode 1," charge control unit 530 outputs control signals SE1 and SE2 for driving relay 190 and relay 155 to relay 190 and relay 155, respectively, based on AC voltage VAC, and outputs control signal CHR for driving charging device 160 to charging device 160.

When mode signal MOD indicates the "charge mode 2," charge control unit 530 initially outputs control signals S1 and S2 for driving switches SW1 and SW2 within resistor circuit 502 to switches SW1 and SW2 respectively, based on pilot signal CPLT and cable connection signal CNCT. Here, charge control unit 530 outputs control signal S1 also to fault determination unit 520.

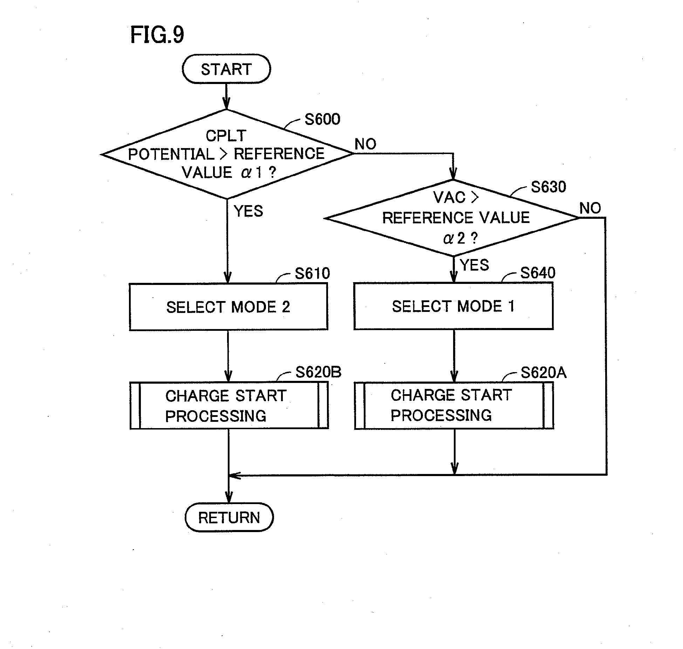

Fig. 9 is a flowchart for illustrating details of charge start control processing performed by vehicle ECU 170 in the present embodiment. Processing in the flowcharts shown in Fig. 9 and Figs. 10 and 11 which will be described later is performed as a program stored in advance in vehicle ECU 170 is called from a main routine and executed every prescribed period. Alternatively, with regard to some steps, processing can also be performed by constructing dedicated hardware (electronic circuits).

Referring to Figs. 2 and 9, vehicle ECU 170 determines in step (hereinafter a step is abbreviated as S) 600 whether a potential of pilot signal CPLT is higher than a prescribed reference value α1 or not, that is, whether the connected charge cable is the "mode 2 cable" or not.

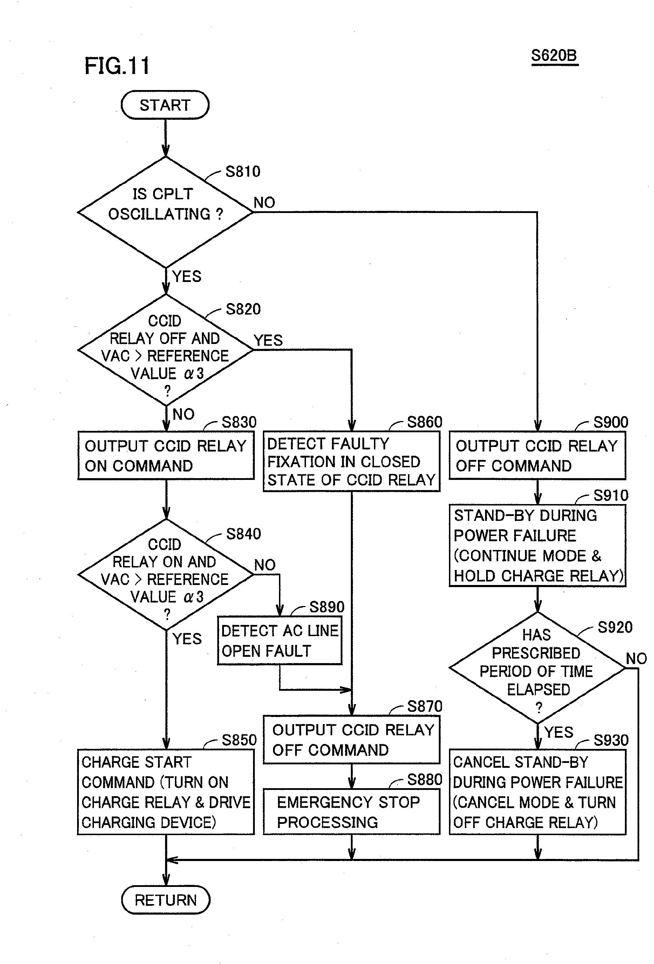

When a potential of pilot signal CPLT is higher than prescribed reference value α1, that is, when the connected charge cable is the "mode 2 cable" (YES in S600), the process proceeds to S610 and mode selection unit 510 of vehicle ECU 170 in Fig. 8 selects the "mode 2" as the charge mode. Then, the process proceeds to S620B and vehicle ECU 170 performs charge start processing which will be described later in connection with Fig. 11, based on the selected charge mode.

On the other hand, when a potential of pilot signal CPLT is not higher than prescribed reference value α1 (NO in S600), the process proceeds to S630 and vehicle ECU 170 then determines whether AC voltage VAC is higher than a prescribed reference value α2 or not.

When AC voltage VAC is higher than prescribed reference value α2 (YES in S630), the process proceeds to S640 and mode selection unit 510 of vehicle ECU 170 in Fig. 8 selects the "mode 1" as the charge mode. Then, the process proceeds to S620A.

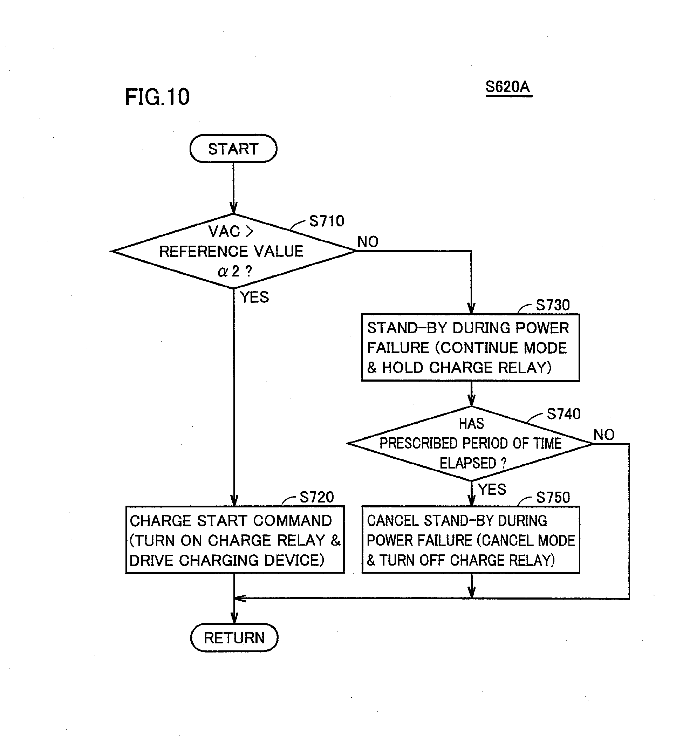

Then, in S620A, vehicle ECU 170 performs charge start processing which will be described later in connection with Fig. 10, based on the selected charge mode.

On the other hand, when AC voltage VAC is not higher than prescribed reference value α2 (NO in S630), pilot signal CPLT is not input and AC voltage VAC is not detected. Therefore, vehicle ECU 170 determines that charging cannot be performed and does not perform the charge start processing, and the process returns to the main routine.

When cable connection signal CNCT is input from the "mode 1 cable," determination may be made in S630 based on cable connection signal CNCT, in consideration of whether the connector is connected or not.

Fig. 10 is a flowchart for illustrating details of the charge start processing performed by vehicle ECU 170 in S620A in Fig. 9 when the "mode 1" is selected as the charge mode.

Referring to Figs. 3 and 10, vehicle ECU 170 determines in S710 whether AC voltage VAC is higher than prescribed reference value α2 or not.

When AC voltage VAC is higher than prescribed reference value α2 (YES in S710), power failure does not occur and the process proceeds to S720. Charge control unit 530 of vehicle ECU 170 in Fig. 8 outputs control signals SE1 and SE2 for driving relays 155 and 190 and outputs control signal CHR for controlling charging device 160, to thereby start actual charging.

On the other hand, when AC voltage VAC is not higher than prescribed reference value α2 (NO in S710), vehicle ECU 170 determines that power failure occurred, the process proceeds to S730, and vehicle ECU 170 sets electrically powered vehicle 10 to the "stand-by during power failure" state. Specifically, vehicle ECU 170 maintains the charge mode in the current "mode 1" and causes relays 155 and 190 to remain in the closed state.

Then, vehicle ECU 170 determines in S740 whether or not a prescribed period of time has elapsed with the "stand-by during power failure" state being maintained. This prescribed period of time can be set, for example, to approximately 7 to 10 seconds.

When the prescribed period of time has not elapsed (NO in S740), the process returns to the main routine. In subsequent processing periods, vehicle ECU 170 waits for lapse of the prescribed period of time.

When the prescribed period of time has elapsed (YES in S740), vehicle ECU 170 cancels the "stand-by during power failure" state in S750, sets the charge mode back to an initial value, and causes relays 155 and 190 to open.

If power failure recovers before lapse of the prescribed period of time, YES is selected in S710 and charging is resumed (S720). When charging is resumed, count of the prescribed period of time in S740 is reset, although not shown.

Fig. 11 is a flowchart for illustrating details of the charge start processing performed by vehicle ECU 170 in S620B in Fig. 9 when the "mode 2" is selected as the charge mode.

Referring to Figs. 1 and 11, vehicle ECU 170 determines in S810 whether pilot signal CPLT is oscillating or not.

When pilot signal CPLT is oscillating (YES in S810), power failure does not occur and the process proceeds to S820, in which whether fault of fixation in a closed state of CCID relay 332 occurred or not is determined. Specifically, whether control signal S1 for switch SW1, which is a command for driving CCID relay 332, is inactive or not and whether AC voltage VAC is higher than a reference value α3 or not is determined.

When fault of fixation in a closed state of CCID relay 332 occurred (YES in S820), vehicle ECU 170 determines in S860 that fault of fixation in a closed state of CCID relay 332 was detected and performs processing for issuing an alarm or the like indicating fault, and the process proceeds to S870.

On the other hand, when fault of fixation in a closed state of CCID relay 332 does not occur (NO in S820), vehicle ECU 170 activates control signal S1 in S830, in order to close CCID relay 332.

Then, vehicle ECU 170 determines in S840 whether AC line open fault occurred or not. Specifically, whether control signal S1 is activated or not and whether AC voltage VAC is higher than reference value α3 or not is determined.

When AC line open fault is absent (YES in S840), the process proceeds to S850. Vehicle ECU 170 determines that fault was not detected, and charge control unit 530 therein shown in Fig. 8 outputs control signals SE1 and SE2 for driving relays 155 and 190 and outputs control signal CHR for controlling charging device 160, to thereby start actual charging.

On the other hand, when AC line open fault is not absent (NO in S840), vehicle ECU 170 determines in S890 that AC line open fault was detected and performs processing for issuing an alarm or the like indicating fault, and the process proceeds to S870.

In S870, since fault of fixation in a closed state of CCID relay 332 or AC line open fault occurred, vehicle ECU 170 inactivates control signal S1 in order to open CCID relay 332. When control signal S1 is originally inactive, that state is maintained.

Thereafter, the process proceeds to S880 and vehicle ECU 170 performs the emergency stop processing in order to suspend the charging processing.

On the other hand, when determination as NO is made in S810, that is, when power failure occurred, the process proceeds to S900 and vehicle ECU 170 inactivates control signal S1 in order to open CCID relay 332.

Then, the process proceeds to S910 and vehicle ECU 170 sets electrically powered vehicle 10 to the "stand-by during power failure" state. Specifically, vehicle ECU 170 maintains the charge mode to the current "mode 2" and causes relays 155 and 190 to remain in the closed state.

Then, vehicle ECU 170 determines in S920 whether or not a prescribed period of time has elapsed with the "stand-by during power failure" state being maintained. This prescribed period of time can be set, for example, to approximately 7 to 10 seconds.

When the prescribed period of time has not elapsed (NO in S920), the process returns to the main routine. In subsequent processing periods, vehicle ECU 170 waits for lapse of the prescribed period of time.

When the prescribed period of time has elapsed (YES in S920), vehicle ECU 170 cancels the "stand-by during power failure" state in S930, sets the charge mode back to an initial value, and causes relays 155 and 190 to open.

If power failure recovers before lapse of the prescribed period of time, YES is selected in S810 and charging is resumed (S850) unless fault is detected. When charging is resumed, count of the prescribed period of time in S920 is reset, although not shown.

A charging system for a vehicle in which a power storage device mounted thereon can be charged by a power supply outside the vehicle under the control in accordance with the processing as above and charging by an external power supply can be performed by using any cable of a charge cable without using pilot signal CPLT (the "mode 1 cable" in the embodiment above) and a charge cable using pilot signal CPLT (the "mode 2 cable" in the embodiment above) can be provided.

In addition, by performing fault detection processing for detecting fixation in a closed state of a CCID relay and AC line open fault only in a mode for charging by using a charge cable using pilot signal CPLT (the "mode 2" in the embodiment above), erroneous fault determination that is made while the "mode 1 cable" is used can be prevented.

Vehicle ECU 170 and CCID control unit 610 in the present embodiment represent examples of the "first control device" and the "second control device" according to the present invention, respectively. In addition, the "charge mode 1" and the "charge mode 2" in the present embodiment represent examples of the "first mode" and the "second mode" according to the present invention, respectively.

Although the present invention has been described and illustrated in detail, it is clearly understood that the same is by way of illustration and example only and is not to be taken by way of limitation, the scope of the present invention being interpreted by the terms of the appended claims.

A vehicle ECU (170) includes the steps of determining whether a potential of a pilot signal CPLT is higher than a prescribed reference value α1 or not (S600) and determining whether an AC voltage VAC is higher than a prescribed reference value α2 or not (S630). When the potential of the pilot signal CPLT is higher than the prescribed reference value α1 (YES in S600), the vehicle ECU (170) selects a mode in which charging is performed by using the pilot signal CPLT (S610). On the other hand, when the potential of the pilot signal CPLT is not higher than the prescribed reference value α1 (NO in S600) and when the AC voltage VAC is higher than the prescribed reference value α2 (YES in S630), the vehicle ECU (170) selects a mode in which charging is performed without using the pilot signal CPLT (S640). Thus, a charging system for a vehicle in which a power storage device mounted thereon can be charged by a power supply outside the vehicle and charging can be performed regardless of whether a pilot signal from a charge cable is present or not is provided.

## Claims

1. A vehicle charged with electric power supplied by an external power supply (402) through a charge cable (300), said charge cable (300) including a power line (340) for transmitting electric power supplied from said external power supply (402) to said vehicle (10) and a first connection portion (310) provided at an end portion of said power line (340) on a vehicle side, for connection to said vehicle (10), comprising:
a power storage device (150) configured to be charged with the electric power supplied by said external power supply (402);
a voltage detector (182) configured to detect a power supply voltage supplied by said external power supply (402);
an inlet (270) for connection to said first connection portion (310);
a charging device (160) for converting the electric power supplied by said external power supply (402) through said inlet (270) and charging said power storage device (150); and
a first control device (170) capable of transmitting and receiving a signal to and from said charge cable (300), for controlling said charging device (160),
said first control device (170) having two charge start modes of a first mode and a second mode, and
said first control device (170) including a mode selection unit (510) for switching between said first mode and said second mode in accordance with a type of said charge cable (300).

2. The vehicle according to claim 1, wherein
in said first mode, charging is started based on said power supply voltage detected by said voltage detector (182),
in said second mode, charging is started based on a pilot signal from said charge cable (300), and
said mode selection unit (510) selects said first mode when said charge cable (300) is a cable incapable of cut-off of the electric power supplied by said external power supply (402) and selects said second mode when said charge cable (300) is a cable capable of cut-off of the electric power supplied by said external power supply (402).

3. The vehicle according to claim 2, wherein
said first control device (170) further includes a charge control unit (530) configured to cause said charging device (160) to start charging when the voltage detected by said voltage detector (182) is higher than a first reference value while said first mode is selected.

4. The vehicle according to claim 2, wherein
said cable capable of cut-off further includes a second control device (330) capable of transmitting and receiving a signal to and from said first control device (170),
said pilot signal is a signal transmitted from said second control device (330) to said first control device (170), relating to a state of connection of said cable capable of cut-off, and
said mode selection unit (510) determines that said charge cable (300) is said cable capable of cut-off based on said pilot signal.

5. The vehicle according to claim 4, wherein
said mode selection unit (510) determines that said charge cable (300) is said cable capable of cut-off when said pilot signal has a potential higher than a second reference value.

6. The vehicle according to claim 5, wherein
said first control device (170) further includes a charge control unit (530) configured to cause said charging device (160) to start charging when said charge cable (300) is said cable capable of cut-off and when said pilot signal has a potential between said second reference value and a third reference value higher than said second reference value.

7. The vehicle according to claim 2, wherein
said cable capable of cut-offfurther includes a relay (332) capable of switching between supply and cut-off of the electric power supplied by said external power supply (402) to said vehicle (10), based on a control command from said first control device (170), and
said first control device (170) further includes
a fault determination unit (520) configured to determine a faulty state of said charge cable (300) based on the control command for said relay (332) and the voltage detected by said voltage detector (182), when said charge cable (300) is said cable capable of cut-off, and
a charge control unit (530) for stopping a charging operation when said fault determination unit (520) determines that said charge cable (300) is faulty.

8. The vehicle according to claim 7, wherein
said fault determination unit (520) determines said charge cable (300) as faulty when the control command for said relay (332) is a command for opening said relay (332) and when the voltage detected by said voltage detector (182) is higher than a prescribed value.

9. The vehicle according to claim 7, wherein
said fault determination unit (520) determines said charge cable (300) as faulty when the control command for said relay (332) is a command for closing said relay (332) and when the voltage detected by said voltage detector (182) is lower than a prescribed value.

10. A method of controlling a vehicle charged with electric power supplied by an external power supply (402) through a charge cable (300), said charge cable (300) including a power line (340) for transmitting electric power supplied from said external power supply (402) to said vehicle (10) and a first connection portion (310) provided at an end portion of said power line (340) on a vehicle side, for connection to said vehicle (10), said vehicle (10) including a power storage device (150) configured to be charged with the electric power supplied by said external power supply (402), a voltage detector (182) configured to detect a power supply voltage supplied by said external power supply (402), an inlet (270) for connection to said first connection portion (310), and a charging device (160) for converting the electric power supplied by said external power supply (402) through said inlet (270) and charging said power storage device (150), said method having a first mode in which charging is started based on the power supply voltage detected by said voltage detector (182) and a second mode in which charging is started based on a pilot signal from said charge cable (300), comprising the steps of:
selecting said first mode when said charge cable (300) is a cable incapable of cut-off of the electric power supplied by said external power supply (402); and
selecting said second mode when said charge cable (300) is a cable capable of cut-off of the electric power supplied by said external power supply (402).
